# EUROPEAN PATENT APPLICATION

(11) **EP 4 350 084 A1**
(43) Date of publication of application: **10.04.2024**
(21) Application number: 22828075.6
(22) Date of filing: 28.04.2022
(51) Int. Cl.: E02F 9/00, B60Q 1/00, B60Q 1/04, F21V 9/40

(54) **ANTIGLARE CONTROL SYSTEM FOR WORK MACHINERY AND METHOD OF ANTIGLARE CONTROL FOR WORK MACHINERY**

(30) Priority: 23.06.2021 JP 2021104266
(71) Applicant: Komatsu Ltd., Minato-ku Tokyo 107-8414 (JP)
(72) Inventor: SHIBATA, Sosuke, Tokyo 107-8414 (JP)
(74) Representative: Grünecker Patent- und Rechtsanwälte PartG mbB
(86) International application number: PCT/JP2022/019317
(87) International publication number: WO 2022/270156

(57) **Abstract**

A headlight (21, 22) irradiates the front of a machine body (2) with light. A work implement (3) has a part located in front of the machine body (2). A controller (30) adjusts reflected light that is reflected by the work implement (3) by emission of the light from the headlight (21, 22), on the basis of work implement information regarding at least one of an attitude of the work implement (3) and an attitude change of the work implement (3) to perform antiglare.

## Description

### TECHNICAL FIELD

The present disclosure relates to an antiglare control system for a work machine and a method of antiglare control for a work machine.

### BACKGROUND ART

In the related art, a structure using a headlight in a wheel loader is disclosed in, for example, Japanese Patent Laying-Open No. 2000 -296727 (PTL 1). In PTL 1, in order to reduce damage of a headlight due to contact with an obstacle, the headlight is attached to an upper portion of a strut on a front side of a canopy.

### CITATION LIST

### PATENT LITERATURE

PTL 1: Japanese Patent Laying-Open No. 2000-296727

### SUMMARY OF INVENTION

### TECHNICAL PROBLEM

Depending on the state of a work implement, light of the headlight is reflected by the work implement, and reflected light enters the eyes of an operator. As a result, the reflected light interferes with an operation.

An object of the present disclosure is to provide an antiglare control system for a work machine and a method of antiglare control for a work machine which can suppress that reflected light interferes with an operation.

### SOLUTION TO PROBLEM

An antiglare control system for a work machine of the present disclosure includes a machine body, a headlight, a work implement, and a controller. The headlight irradiates the front of the machine body with light. The work implement has a part located in front of the machine body. The controller adjusts reflected light that is reflected by the work implement by emission of the light from the headlight, based on work implement information regarding at least one of an attitude of the work implement and an attitude change of the work implement to perform antiglare.

A method of antiglare control for a work machine of the present disclosure is a method of antiglare control for a work machine including a machine body, a headlight that irradiates a front of the machine body with light, and a work implement that has a part located in front of the machine body, and includes the followings. Work implement information regarding at least one of an attitude of the work implement and an attitude change of the work implement is acquired. Reflected light that is reflected by the work implement by emission of the light from the headlight is adjusted on the basis of the acquired work implement information to perform antiglare.

### ADVANTAGEOUS EFFECTS OF INVENTION

According to the present disclosure, it is possible to realize an antiglare control system for a work machine and a method of antiglare control for a work machine which can suppress that reflected light interferes with an operation.

### BRIEF DESCRIPTION OF DRAWINGS

Fig. 1 is a perspective view illustrating a configuration of a wheel loader as an example of a work machine according to an embodiment of the present disclosure.
Fig. 2 is a side view illustrating an irradiation range of a headlight and an attitude of a work implement in the wheel loader of Fig. 1.
Fig. 3 is a diagram illustrating an example of functional blocks in an antiglare control system of the work machine illustrated in Fig. 1.
Fig. 4 is a flowchart illustrating an example of a method of antiglare control for the work machine illustrated in Fig. 1.

### DESCRIPTION OF EMBODIMENTS

Hereinafter, embodiments of the present disclosure will be described in detail with reference to the drawings. In the specification and the drawings, the same components or corresponding components are denoted by the same reference numerals, and redundant description will not be repeated. In the drawings, the configuration may be omitted or simplified for convenience of description. At least a part of the embodiments and modification examples may be arbitrarily combined with each other.

### <Configuration of Wheel loader 1>

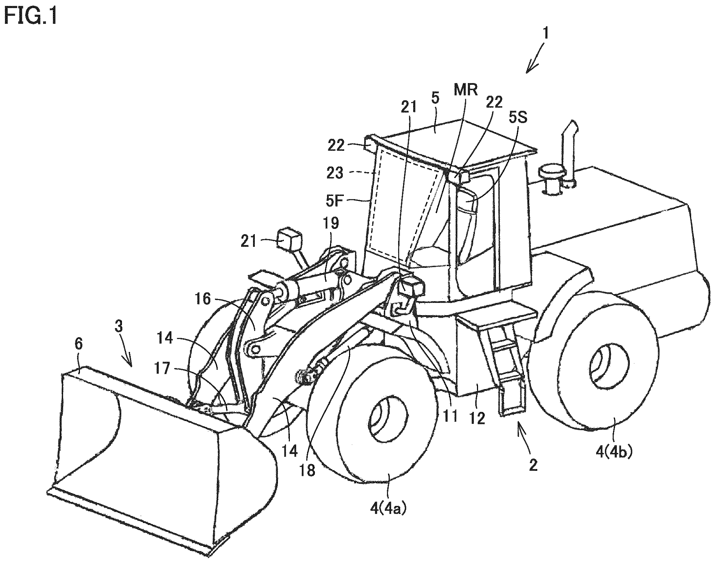

A configuration of a wheel loader as an example of a work machine according to an embodiment will be described with reference to Fig. 1. The work machine in the present embodiment is not limited to the wheel loader. The work machine of the present embodiment may be any work machine as long as a work implement and a headlight are mounted and the work implement is located in front of a cab (operator's cab), and may be a crawler dozer, a backhoe loader, or the like.

Fig. 1 is a perspective view illustrating a configuration of the wheel loader as an example of the work machine according to an embodiment of the present disclosure. A wheel loader 1 includes a machine body 2, a work implement 3, a traveling apparatus 4, and a cab 5.

Machine body 2 has a front frame 11, and a rear frame 12. Work implement 3 is attached to front frame 11. An engine (not illustrated) or the like is mounted on rear frame 12.

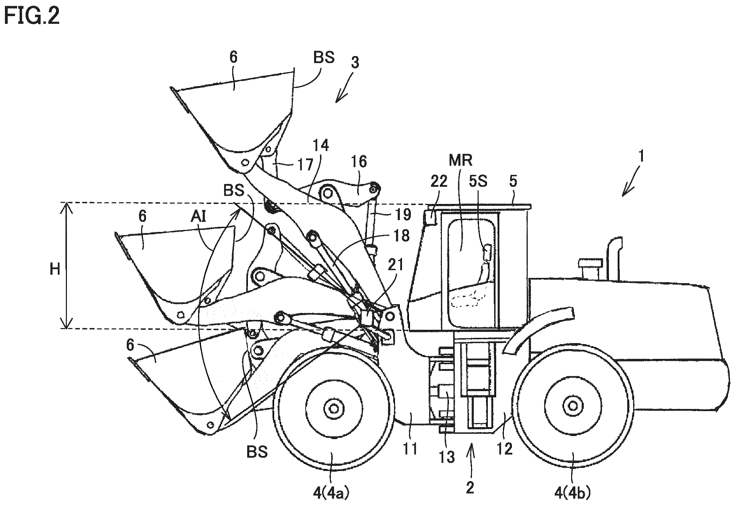

A steering cylinder 13 (Fig. 2) is attached to front frame 11 and rear frame 12. Steering cylinder 13 is a hydraulic cylinder that expands and contracts by supply of hydraulic oil. Front frame 11 and rear frame 12 are swingable in a left-right direction by extension and contraction of steering cylinder 13.

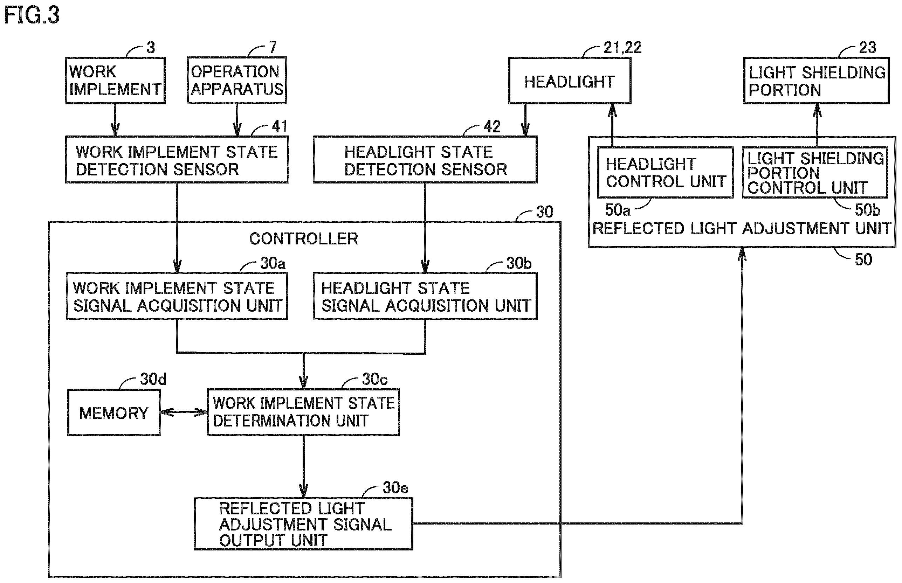

Traveling apparatus 4 has a front running wheel 4a and a rear running wheel 4b. In a case of each of front running wheel 4a and rear running wheel 4b is rotationally driven, wheel loader 1 is self-propelled. Cab 5 is placed on machine body 2, and is attached to rear frame 12. Cab 5 is disposed behind work implement 3. In cab 5, a driver's seat 5S on which the operator sits, an operation apparatus 7 (Fig. 3) operated by the operator, and the like are disposed.

Work implement 3 is attached to the front of front frame 11. Therefore, work implement 3 has a part located in front of machine body 2. Work implement 3 is located in front of cab 5. Work implement 3 has a bucket 6, a boom 14, a bell crank 16, a tilt rod 17, a boom cylinder 18, and a bucket cylinder 19. Bucket 6 is an aspect of an attachment. The attachment is not limited to bucket 6, and may be another aspect such as a fork or a breaker.

A proximal end of boom 14 is rotatably attached to front frame 11. Bucket 6 is rotatably attached to a distal end of boom 14. Boom cylinder 18 drives boom 14. One end of boom cylinder 18 is rotatably attached to front frame 11. The other end of boom cylinder 18 is rotatably attached to boom 14.

Boom cylinder 18 is, for example, a hydraulic cylinder. Boom cylinder 18 expands and contracts by the supply and discharge of the hydraulic oil. As a result, boom 14 is driven, and bucket 6 attached to the distal end of boom 14 is raised or lowered. In a state where the distal end of boom 14 is raised, bucket 6 is located at a position higher than cab 5.

One end portion of bell crank 16 is connected to front frame 11 via bucket cylinder 19. The other end portion of bell crank 16 is connected to bucket 6 via tilt rod 17 or the like.

One end of bucket cylinder 19 is rotatably attached to front frame 11. The other end of bucket cylinder 19 is rotatably attached to bell crank 16. Bucket cylinder 19 is, for example, a hydraulic cylinder. Bucket cylinder 19 expands and contracts by the supply and discharge of the hydraulic oil. As a result, bucket 6 is driven, and bucket 6 rotates up and down with respect to boom 14.

Wheel loader 1 has a pair of left and right headlights 21 and a pair of left and right headlights 22. Each of pair of left and right headlights 21 is attached to front frame 11. Each of pair of left and right headlights 22 is attached near an upper end (roof) of cab 5.

Each of headlights 21 and 22 irradiates the front of machine body 2 with light. Each of headlights 21 and 22 can change, for example, the irradiation intensity of light. Each of headlights 21 and 22 can switch between a high beam and a low beam, for example. In the high beam, an irradiation distance of light in front of wheel loader 1 is longer than that of the low beam. Each of headlights 21 and 22 is not limited to switching between two stages of the high beam and the low beam, and for example, an inclination angle of an irradiation axis of light in headlights 21 and 22 may be changed in three or more stages or steplessly. The inclination angle of the irradiation axis is an angle at which the irradiation axis is inclined with respect to a fore/aft direction.

Wheel loader 1 includes a recognition portion that recognizes an image outside machine body 2. The recognition portion that recognizes an image outside machine body 2 includes at least one of cab 5, driver's seat 5S, and a camera (not illustrated). The image outside machine body 2 includes information on an amount of reflected light emitted from headlights 21 and 22, reflected by work implement 3, and reaching the recognition portion.

The recognition portion is a part that recognizes reflected light generated when light emitted from headlights 21 and 22 is reflected by work implement 3. A subject that recognizes the image outside machine body 2 may be, for example, an operator riding in an internal space of cab 5, an operator sitting on driver's seat 5S, or a camera. For this reason, cab 5 as the recognition portion may be, for example, a boarding region MR (for example, internal space of cab 5) of the operator in cab 5. In the following, boarding region MR will be described as an example of the recognition portion that recognizes an image outside machine body 2.

Cab 5 has a front window 5F. Front window 5F is disposed in front of boarding region MR. Front window 5F is configured to be able to adjust the transmittance of light in front window 5F. Front window 5F has, for example, a light shielding portion 23. Light shielding portion 23 can adjust the transmittance of light in front window 5F. Light shielding portion 23 is, for example, a liquid crystal panel.

The liquid crystal panel constituting light shielding portion 23 has a configuration in which liquid crystal is sandwiched between two polarizing plates. The two polarizing plates are disposed such that the orientations of the polarizing plates are shifted from each other by 90 degrees. Liquid crystal molecules are disposed between the two polarizing plates so as to be twisted by 90 degrees from one polarizing plate to the other polarizing plate. As a result, the liquid crystal panel transmits light in a state where no voltage is applied to the liquid crystal. On the other hand, in a case where a voltage is applied to the liquid crystal, the liquid crystal molecules stand upright and the twist is eliminated, so that the liquid crystal panel blocks light. Using this principle, the transmittance of light in front window 5F is adjusted by adjusting the voltage to be applied to the liquid crystal of the liquid crystal panel.

In wheel loader 1 of the present embodiment, one or more selected from the group consisting of the inclination angle of the irradiation axis in headlights 21 and 22, the irradiation intensity of light in headlights 21 and 22, and the transmittance of light in front window 5F can be adjusted. As a result, the intensity of the reflected light, which is emitted from headlights 21 and 22 and is then reflected by work implement 3 to be directed toward boarding region MR, can be adjusted. Adjustment of the inclination angle of the irradiation axis in headlights 21 and 22 includes switching between a high beam and a low beam of each of headlights 21 and 22.

Positional relationships between the front and rear, the left and right, and the upper and lower is based on the operator sitting on driver's seat 5S in cab 5. The front is a direction facing the operator sitting on driver's seat 5S. The rear is a direction facing the front. The left-right direction is the left-right direction of the operator sitting on driver's seat 5S. An up-down direction is an up-down direction of the operator sitting on the driver's seat.

In the work machine such as a backhoe loader, a first work implement (for example, a loader bucket) and a second work implement (for example, a backhoe) are attached to one side and the other side of machine body 2 in the fore/aft direction, respectively. In such a work machine, in a case where the first work implement is located in front of the operator sitting on driver's seat 5S, the side on which the first work implement is attached with respect to machine body 2 is the front. In a case where the second work implement is located in front of the operator sitting on driver's seat 5S, the side on which the second work implement is attached with respect to machine body 2 is the front.

### <Irradiation Range of Headlight and Attitude of Work implement>

Next, the irradiation range of the headlight and the attitude of the work implement in the wheel loader of Fig. 1 will be described.

Fig. 2 is a side view illustrating the irradiation range of the headlight and the attitude of the work implement in the wheel loader of Fig. 1. Fig. 2 illustrates a state in which headlight 21 is a high beam, for example. In a case where headlight 21 is a high beam, headlight 21 illuminates an irradiation range AI in a side view.

On the other hand, work implement 3 is driven in the up-down direction in front of machine body 2. For example, bucket 6 of work implement 3 passes through the same height position as a height position H of boarding region MR in front of boarding region MR in a case of being raised with respect to machine body 2. For example, bucket 6 of work implement 3 passes through irradiation range AI of headlight 21.

In a state where work implement 3 is located in irradiation range AI by driving of work implement 3, light emitted from the headlight 21 is emitted to work implement 3 and reflected by work implement 3. For example, in a case where bucket 6 is located in irradiation range AI, light emitted from headlight 21 is emitted to a rear surface BS of bucket 6 and reflected by rear surface BS. The reflected light reflected by work implement 3 may illuminate boarding region MR depending on the angle of rear surface BS of bucket 6. In a case where the reflected light illuminates boarding region MR, the irradiation intensity of the light with which boarding region MR is irradiated becomes greater than or equal to a predetermined value, and boarding region MR is in a glare state.

In the present embodiment, in a case where it is determined that boarding region MR is in a glare state (a state where the irradiation intensity is greater than or equal to the predetermined value) on the basis of the information regarding the attitude (angle of boom 14, angle of bucket 6) of work implement 3, the adjustment of the reflected light is executed. The attitude of work implement 3 in which the adjustment of the reflected light is executed is a predetermined angle of boom 14 at which the height of boom 14 is greater than or equal to a predetermined height, and in addition, a predetermined angle of bucket 6 at which bucket 6 is in a holding (tilting) state facing cab 5 in the fore/aft direction. In the adjustment of the reflected light, the reflected light from work implement 3 is adjusted such that boarding region MR is in a non-glare state in a case where it is determined that boarding region MR is in the glare state on the basis of the attitude of work implement 3.

Further, in the adjustment of the reflected light, the reflected light from work implement 3 may be adjusted such that boarding region MR is in a non-glare state in a case where it is determined that boarding region MR is in the glare state on the basis of information regarding the attitude change of work implement 3. The information regarding the attitude change of work implement 3 is, for example, information regarding at least one of a change in pressure of a cylinder included in work implement 3 and a change in an input signal of an operation apparatus that operates work implement 3. The cylinders included in work implement 3 are, for example, boom cylinder 18 and bucket cylinder 19. Operation apparatus 7 (Fig. 3) for operating work implement 3 is, for example, a boom lever operated by the operator.

Specifically, the adjustment of the reflected light may be executed on the basis of, for example, a state in which an operation aspect of work implement 3 becomes, for example, a loaded state. This is because, in a case where the operation aspect of work implement 3 is in a loaded state, work implement 3 is raised up with respect to machine body 2 and passes through irradiation range AI of headlight 21 in order to load the load onto a dump truck.

As described above, in the adjustment of the reflected light, the reflected light from bucket 6 is adjusted such that boarding region MR is in a non-glare state in a case where it is determined that boarding region MR is in the glare state on the basis of work implement information regarding at least one of the attitude of work implement 3 and the attitude change of work implement 3, and thus anti-glare is performed.

In the adjustment of the reflected light, in order to adjust the reflected light from bucket 6 toward boarding region MR, for example, any of the inclination angle of the irradiation axis of headlight 21, the irradiation intensity of headlight 21, and the transmittance of light shielding portion 23 is automatically adjusted alone or in any combination.

Although the relationship between irradiation range AI of headlight 21 and the state of work implement 3 has been described in Fig. 2, the relationship between the irradiation range of headlight 22 and the state of work implement 3 is also similar to the above description, and thus the description thereof will not be repeated.

### <Configuration of Antiglare Control System>

Next, a configuration of the antiglare control system according to the present embodiment will be described with reference to Fig. 3.

Fig. 3 is a diagram illustrating an example of functional blocks in the antiglare control system of the work machine illustrated in Fig. 1. As illustrated in Fig. 3, the antiglare control system includes work implement 3, operation apparatus 7, headlights 21 and 22, light shielding portion 23, a controller 30, a work implement state detection sensor 41, a headlight state detection sensor 42, and a reflected light adjustment unit 50.

The work implement state detection sensor 41 detects at least one state (attitude or attitude change of work implement 3) of the state of work implement 3 and the state of operation apparatus 7. The work implement state detection sensor 41 is, for example, a stroke sensor, a potentiometer, an inertial measurement unit (IMU), an imaging device, a pressure sensor, or the like.

In a case where a stroke sensor is used as work implement state detection sensor 41, for example, the stroke sensor is attached to each of boom cylinder 18 and bucket cylinder 19. The stroke amount of each cylinder can be detected by the stroke sensor. The attitude of work implement 3 can be detected from these stroke amounts.

In a case where a potentiometer is used as work implement state detection sensor 41, for example, the potentiometer is attached to the vicinity of an end portion of boom cylinder 18 on boom 14 side and the vicinity of an end portion of bucket cylinder 19 on bell crank 16 side. Each potentiometer can detect each of a rotation angle of boom 14 with respect to machine body 2, and a rotation angle of bucket 6 with respect to boom 14. The attitude of work implement 3 can be detected from these rotation angles.

In a case where an IMU is used as work implement state detection sensor 41, for example, the IMU is attached to each of boom 14 and bucket 6. Each IMU detects angles (or angular velocities) of three axes and acceleration. The attitude of each of boom 14 and bucket 6 can be detected from the angles (or angular velocities) of the three axes and the acceleration detected by the IMU.

In a case where an imaging device is used as work implement state detection sensor 41, the states of boom 14 and bucket 6 are imaged by the imaging device. The attitude of each of boom 14 and bucket 6 can be detected from imaging information captured by the imaging device.

In a case where a pressure sensor is used as work implement state detection sensor 41, for example, the hydraulic pressure of at least one of boom cylinder 18 and bucket cylinder 19 is detected by the pressure sensor. By detecting the hydraulic pressure of at least one of boom cylinder 18 and bucket cylinder 19, it is possible to detect the operation aspect of whether work implement 3 is in an unloaded state or a loaded state. As a result, a change in pressure of cylinders 18 and 19 included in work implement 3 can be detected by work implement state detection sensor 41.

In a case where a pressure sensor is used as work implement state detection sensor 41, for example, a pilot oil pressure (PPC pressure) in pilot hydraulic operation apparatus 7 is detected by the pressure sensor. In a case where a potentiometer is used as work implement state detection sensor 41, for example, an operation angle in electric operation apparatus 7 is detected by the potentiometer. As a result, a change in input of operation apparatus 7 can be detected by work implement state detection sensor 41.

Headlight state detection sensor 42 detects an irradiation state of headlights 21 and 22. Headlight state detection sensor 42 is, for example, an angle sensor, a high-low detection sensor, a current sensor, or the like.

In a case where an angle sensor is used as headlight state detection sensor 42, the inclination angle of the irradiation axis in headlights 21 and 22 is detected by the angle sensor.

In a case where a high-low detection sensor is used as headlight state detection sensor 42, whether headlights 21 and 22 are in a high beam state or a low beam state is detected by the high-low detection sensor.

For example, in a case where a valve is switched between a high beam and a low beam, the high-low detection sensor detects whether a current is supplied to a high beam valve or a low beam valve. In this case, the high-low detection sensor is, for example, a current sensor.

In a case where current sensor is used as headlight state detection sensor 42, the amount of current supplied to headlights 21 and 22 is detected by the current sensor. By detecting the amount of current by the current sensor, the irradiation intensity of headlights 21 and 22 can be detected.

Controller 30 adjusts the reflected light, which is reflected by work implement 3 by the emission of the light from headlights 21 and 22 and is directed toward boarding region MR, on the basis of the state of work implement 3 to perform antiglare. Controller 30 determines the state of work implement 3 on the basis of at least one of the attitude of work implement 3 and the operation aspect of work implement 3. Controller 30 adjusts one or more selected from the group consisting of the inclination angle of the irradiation axis in headlights 21 and 22, the irradiation intensity of light in headlights 21 and 22, and the transmittance of front window 5F, thereby adjusting the reflected light reflected by work implement 3 toward boarding region MR to perform anti-glare.

Controller 30 ends the adjustment of the reflected light in a case of determining that the recognition portion (for example, boarding region MR) that recognizes the image outside machine body 2 has shifted from the glare state to the non-glare state on the basis of the work implement information regarding at least one of the attitude of work implement 3 and the attitude change of work implement 3, and determining to end the adjustment of the reflected light.

Controller 30 includes a work implement state signal acquisition unit 30a, a headlight state signal acquisition unit 30b, a work implement state determination unit 30c, a memory 30d, and a reflected light adjustment signal output unit 30e.

Work implement state signal acquisition unit 30a acquires a detection result of work implement state detection sensor 41 as a signal indicating the work implement information regarding at least one of the attitude of work implement 3 and the attitude change of work implement 3. Work implement state signal acquisition unit 30a outputs the acquired signal indicating the work implement information to work implement state determination unit 30c.

Headlight state signal acquisition unit 30b acquires a signal indicating a detection result of headlight state detection sensor 42. Headlight state signal acquisition unit 30b outputs the acquired signal to work implement state determination unit 30c.

Memory 30d stores a relationship table indicating relationships among the state of work implement 3, the state of headlights 21 and 22, and the intensity of the reflected light in boarding region MR. Memory 30d may be included in controller 30 or may be provided separately from controller 30.

Work implement state determination unit 30c determines whether or not the reflected light from work implement 3 is in a glare state when the state of work implement 3 is viewed from boarding region MR, on the basis of the signal acquired from work implement state signal acquisition unit 30a and the signal acquired from headlight state signal acquisition unit 30b. In this case, work implement state determination unit 30c refers to the relationship table stored in memory 30d. Work implement state determination unit 30c outputs a signal indicating a determination result to reflected light adjustment signal output unit 30e.

In a case where the signal indicating the determination result from work implement state determination unit 30c is acquired, reflected light adjustment signal output unit 30e outputs the signal to reflected light adjustment unit 50. Reflected light adjustment unit 50 is adjusted by the signal output from reflected light adjustment signal output unit 30e.

Reflected light adjustment unit 50 adjusts the state of headlights 21 and 22 or light shielding portion 23 on the basis of the signal from controller 30 (reflected light adjustment signal output unit 30e). Reflected light adjustment unit 50 includes a headlight control unit 50a, and a light shielding portion control unit 50b. Headlight control unit 50a adjusts the inclination angle of the irradiation axis, the irradiation intensity, and the like of headlights 21 and 22. Light shielding portion control unit 50b adjusts the transmittance of light shielding portion 23.

Headlight control unit 50a controls, for example, the inclination angle of the irradiation axis of headlights 21 and 22. In addition, headlight control unit 50a controls switching between a high beam and a low beam of headlights 21 and 22, for example. For example, in a case where the valve is switched between the high beam and the low beam, headlight control unit 50a performs control to switch the current to be supplied to the high beam valve and the low beam valve. In addition, headlight control unit 50a controls, for example, the amount of current to be supplied to headlights 21 and 22. As a result, the irradiation intensity of headlights 21 and 22 is controlled.

In a case where light shielding portion 23 includes, for example, a liquid crystal panel, light shielding portion control unit 50b adjusts the voltage to be applied to the liquid crystal of the liquid crystal panel. Thus, the transmittance of light in light shielding portion 23 is adjusted by light shielding portion control unit 50b.

In a case where reflected light adjustment unit 50 acquires the determination result that the reflected light in boarding region MR is in a glare state, reflected light adjustment unit 50 adjusts the intensity of the reflected light in boarding region MR. Specifically, headlight control unit 50a adjusts the irradiation axis of headlights 21 and 22 such that, for example, work implement 3 is not irradiated with light from headlights 21 and 22 as much as possible, or the reflected light reflected by work implement 3 is not directed to boarding region MR as much as possible. For example, headlight control unit 50a switches headlights 21 and 22 from a high beam to a low beam. Light shielding portion control unit 50b controls light shielding portion 23 such that front window 5F does not easily transmit light. For example, light shielding portion control unit 50b applies a voltage to the liquid crystal of the liquid crystal panel to make it difficult for light to transmit through the liquid crystal panel.

Controller 30 may be mounted on wheel loader 1, or may be disposed away from the outside of wheel loader 1. In a case where controller 30 is disposed away from the outside of wheel loader 1, controller 30 may be wirelessly connected to sensors 41 and 42, reflected light adjustment unit 50, and the like. Controller 30 is, for example, a processor, and may be a central processing unit (CPU).

### <Method of Antiglare Control>

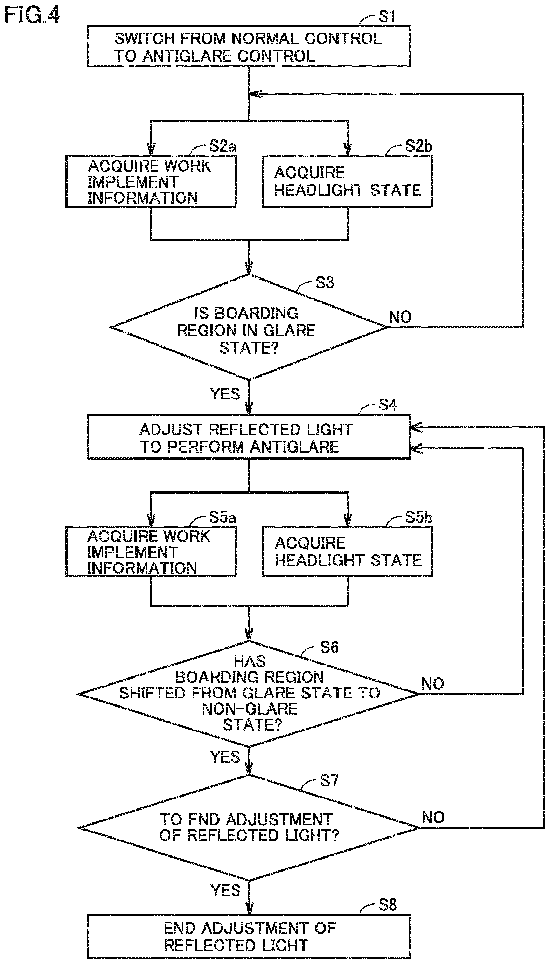

Next, a method of antiglare control according to the present embodiment will be described with reference to Figs. 3 and 4.

Fig. 4 is a flowchart illustrating an example of the method of antiglare control for the work machine illustrated in Fig. 1. As illustrated in Figs. 3 and 4, first, normal control is switched to antiglare control (step S 1). Switching from the normal control to the antiglare control is performed, for example, by an operator operating a changeover switch from the normal control to the antiglare control.

The normal control is control other than the antiglare control. In the normal control, the inclination angle of the irradiation axis and the irradiation intensity of headlights 21 and 22, the transmittance of light shielding portion 23, and the like are adjusted by manual operation of the operator.

By switching to the antiglare control, the antiglare control is started. In the antiglare control, as described above, the irradiation states of headlights 21 and 22 or the transmittance of light shielding portion 23 are automatically adjusted by controller 30 on the basis of the states of headlights 21 and 22, the state of work implement 3, and the state of operation apparatus 7.

In the antiglare control, work implement state signal acquisition unit 30a of controller 30 acquires a signal indicating the work implement information from work implement state detection sensor 41 (step S2a). Work implement state signal acquisition unit 30a outputs the signal indicating the work implement information to work implement state determination unit 30c.

Headlight state signal acquisition unit 30b of controller 30 acquires a signal indicating the states of headlights 21 and 22 from headlight state detection sensor 42 (step S2b). Headlight state signal acquisition unit 30b outputs the signal indicating the states of headlights 21 and 22 to work implement state determination unit 30c.

Thereafter, work implement state determination unit 30c determines whether or not boarding region MR is in a glare state due to the reflected light on the basis of the signal indicating the state of each of work implement 3 and headlights 21 and 22 (step S3). In this determination, work implement state determination unit 30c refers to the relationship table indicating the relationship between the states of work implement 3 and headlights 21 and 22 and the glare (intensity of reflected light) in boarding region MR, stored in memory 30d.

In this determination, as illustrated in Fig. 2, for example, it is determined whether or not boarding region MR is in a glare state since work implement 3 is located in irradiation range AI of headlight 21 and the reflected light reflected by work implement 3 is directed to boarding region MR.

In a case where it is determined in the above determination that boarding region MR is not in a glare state, the acquisition of the work implement information (step S2a) and the acquisition of the state of headlight 21 (step S2b) are repeated. In addition, in a case where it is determined in the above determination that boarding region MR is in a glare state, the reflected light from work implement 3 is adjusted to perform antiglare (step S4).

The adjustment of the reflected light is performed, for example, by reducing the irradiation intensity of headlights 21 and 22. The irradiation intensity of headlights 21 and 22 is reduced, for example, by reducing the current value supplied to headlights 21 and 22.

The adjustment of the reflected light may be performed by adjusting the inclination angle of the irradiation axis of headlights 21 and 22. As a result, the inclination angle of the irradiation axis of headlight 21 is adjusted so that, for example, bucket 6 does not enter irradiation range AI of headlight 21. The adjustment of the inclination angle of the irradiation axis of headlights 21 and 22 may be performed, for example, by switching headlight 21 from a high beam to a low beam.

The adjustment of reflected light may be performed by lowering the transmittance of light shielding portion 23. In a case where the light shielding portion 23 includes a liquid crystal panel, the transmittance of light shielding portion 23 is adjusted by increasing the voltage to be applied to the liquid crystal of the liquid crystal panel.

As described above, the reflected light reflected toward boarding region MR is adjusted on the basis of the states of work implement 3 and headlight 21 to perform antiglare.

Thereafter, in a case where it is confirmed that boarding region MR is in a non-glare state, the adjustment of the reflected light may be cancelled. Hereinafter, the cancellation of the reflected light adjustment will be described below.

After the adjustment of the reflected light (step S4) is performed, work implement state signal acquisition unit 30a acquires a signal indicating the work implement information from work implement state detection sensor 41 (step S5a). Work implement state signal acquisition unit 30a outputs the signal indicating the work implement information to work implement state determination unit 30c. In addition, headlight state signal acquisition unit 30b acquires a signal indicating the states of headlights 21 and 22 from headlight state detection sensor 42 (step S5b). Headlight state signal acquisition unit 30b outputs the signal indicating the states of headlights 21 and 22 to work implement state determination unit 30c.

Thereafter, work implement state determination unit 30c determines whether or not boarding region MR has shifted to a non-glare state from a glare state by the reflected light on the basis of the signals indicating the work implement information and the states of headlights 21 and 22 (step S6). In this determination, work implement state determination unit 30c refers to the relationship table indicating the relationship between the states of work implement 3 and headlights 21 and 22 and the glare (intensity of reflected light) in boarding region MR, stored in memory 30d.

In this determination, in a case where work implement state determination unit 30c determines that boarding region MR has not shifted to a non-glare state, the reflected light is adjusted again (step S4). In addition, in a case where work implement state determination unit 30c determines that boarding region MR has shifted to a non-glare state in this determination, it is determined whether or not to end the adjustment of the reflected light (step S7).

The determination as to whether or not to end the adjustment of the reflected light is performed on the condition of whether or not the angle of work implement 3 is less than or equal to a predetermined angle and whether or not the operation state is a loaded state (bottom pressure of boom cylinder 18 is less than or equal to a predetermined value).

In a case where it is determined in this determination that the adjustment of the reflected light should not be ended, the adjustment of the reflected light (step S4) is maintained. In addition, in a case where it is determined in this determination that the adjustment of the reflected light should be ended, the adjustment of the reflected light is ended so as not to perform the adjustment of the reflected light (step S8).

The antiglare control is continued even after the adjustment of the reflected light is ended. Therefore, in a case where controller 30 determines that boarding region MR is in a glare state after the adjustment of the reflected light is ended, the adjustment of the reflected light is performed again. Switching from the antiglare control to the normal control is performed, for example, by an operator operating a changeover switch from the antiglare control to the normal control.

### <Effects>

Next, effects of the present embodiment will be described.

In a case where the work machine is operated in a dark place, the front of the work machine can be brightly illuminated by illuminating the front using the headlight. As a result, the operator can understand the topography in front of the work machine, the condition of the cargo, and the like.

As illustrated in Fig. 2, work implement 3 enters irradiation range AI of headlight 21, and the light emitted from headlight 21 is reflected by work implement 3 to be directed toward boarding region MR, so that boarding region MR is in a glare state. This is more noticeable in a case where an LED is used as headlight 21, in a case where work implement 3 is wet with water due to rain or the like, and the like.

As a countermeasure, for example, a method for changing work implement 3 to a color or a material that easily absorbs light can be considered. However, there are sites where buckets cannot be painted (for example, livestock related sites). In addition, there is a case where the material cannot be changed from operation content or the like.

On the other hand, in the present embodiment, as illustrated in Figs. 1 and 3, reflected light adjustment signal output unit 30e of controller 30 issues a command to adjust the reflected light, which is reflected by work implement 3 by the emission of the light from headlights 21 and 22 and is directed toward boarding region MR, on the basis of the work implement information. As a result, the reflected light is adjusted by reflected light adjustment unit 50, and it is suppressed that the reflected light that is reflected from work implement 3 interferes with the operation. This eliminates the need to change the color, material, and the like of work implement 3.

In the present embodiment, as illustrated in Figs. 1 and 3, the information regarding the attitude change of work implement 3 as the work implement information is information regarding at least one of a change in pressure of cylinders 18 and 19 included in work implement 3 and a change in input of operation apparatus 7 that operates work implement 3. As a result, it is possible to adjust the reflected light based on a change in pressure of cylinders 18 and 19 and a change in input of operation apparatus 7.

In the present embodiment, as illustrated in Figs. 1 and 3, reflected light adjustment signal output unit 30e of controller 30 issues a command to adjust one or more selected from the group consisting of the inclination angle of the irradiation axis in headlights 21 and 22, the irradiation intensity of light in headlights 21 and 22, and the transmittance of light in front window 5F. As a result, the intensity of the reflected light that is reflected by work implement 3 to be directed toward boarding region MR is adjusted.

In the present embodiment, as illustrated in Fig. 4, controller 30 ends the adjustment of the reflected light in a case of determining that the recognition portion (for example, boarding region MR) that recognizes the image outside machine body 2 has shifted from a glare state to a non-glare state on the basis of the work implement information, and determining to end the adjustment of the reflected light. As a result, in a case where the recognition portion is in a non-glare state, the adjustment of the reflected light is automatically ended.

Further, in the present embodiment, as illustrated in Fig. 2, when work implement 3 is raised with respect to machine body 2, work implement 3 passes through a position located in front of the recognition portion (for example, boarding region MR), and located at the same height position as height position H of the recognition portion. In such work machine 1, the light emitted from headlight 21 is easily reflected by the recognition portion. Therefore, the glare of the recognition portion can be effectively reduced by executing the antiglare control of the present embodiment on such work machine 1.

Although the description has been made that headlights 21 and 22 are disposed in front of cab 5, the headlights may be any headlights as long as the headlights can irradiate the front of machine body 2 with light even in a case where the headlights are located behind cab 5. In work implement 3, entire work implement 3 may be located in front of machine body 2, or only a part of work implement 3 may be located in front of machine body 2. In addition, the irradiation intensity of headlights 21 and 22 may be adjusted by adjusting the number of light sources (for example, light emitting diodes (LEDs)) to be turned on as headlights 21 and 22.

In the above-described embodiment, the description has been made that boarding region MR is as an example of the recognition portion that recognizes the image outside machine body 2. However, the recognition portion is not limited to boarding region MR, and may be any of cab 5, driver's seat 5S, and the camera.

It should be understood that the embodiments disclosed herein are illustrative in all respects and not restrictive. The scope of the present invention is defined not by the above description but by the claims, and is intended to include meanings equivalent to the claims and all modifications within the scope.

### REFERENCE SIGNS LIST

1: wheel loader, 2: machine body, 3: work implement, 4: traveling apparatus, 4a: front running wheel, 4b: rear running wheel, 5: cab, 5F: front window, 5S: driver's seat, 6: bucket, 7: operation apparatus, 11: front frame, 12: rear frame, 13: steering cylinder, 14: boom, 16: bell crank, 17: tilt rod, 18: boom cylinder, 19: bucket cylinder, 21, 22: headlight, 23: light shielding portion, 30: controller, 30a: work implement state signal acquisition unit, 30b: headlight state signal acquisition unit, 30c: work implement state determination unit, 30d: memory, 30e: reflected light adjustment signal output unit, 41: work implement state detection sensor, 42: headlight state detection sensor, 50: reflected light adjustment unit, 50a: headlight control unit, 50b: light shielding portion control unit, AI: irradiation range, BS: rear surface, MR: monitoring region

## Claims

1. An antiglare control system for a work machine, the antiglare control system comprising:
a machine body;
a headlight that irradiates a front of the machine body with light;
a work implement that has a part located in front of the machine body; and
a controller that adjusts reflected light that is reflected by the work implement by emission of the light from the headlight, based on work implement information regarding at least one of an attitude of the work implement and an attitude change of the work implement to perform antiglare.

2. The antiglare control system for a work machine according to claim 1, wherein information regarding the attitude change of the work implement is information regarding at least one of a change in pressure of a cylinder included in the work implement and a change in input of an operation apparatus that operates the work implement.

3. The antiglare control system for a work machine according to claim 1 or 2, further comprising a cab mounted on the machine body, wherein the work implement has a bucket.

4. The antiglare control system for a work machine according to claim 3, wherein
the cab has a front window, and
the controller adjusts the reflected light that is reflected by the work implement, by adjusting one or more selected from the group consisting of an inclination angle of an irradiation axis in the headlight, an irradiation intensity of light in the headlight, and transmittance of light in the front window.

5. The antiglare control system for a work machine according to any one of claims 1 to 4, wherein the controller ends adjustment of the reflected light in a case of determining that a recognition portion that recognizes an image outside the machine body has shifted from a glare state to a non-glare state based on the work implement information and determining to end the adjustment of the reflected light.

6. The antiglare control system for a work machine according to claim 1 or 2, wherein in a case where the work implement is raised with respect to the machine body, the work implement passes through a position located in front of a recognition portion that recognizes an image outside the machine body, and located at the same height position as a height position of the recognition portion.

7. A method of antiglare control for a work machine including a machine body, a headlight that irradiates a front of the machine body with light, and a work implement that has a part located in front of the machine body, the method comprising:
acquiring work implement information regarding at least one of an attitude of the work implement and an attitude change of the work implement; and
adjusting reflected light that is reflected by the work implement by emission of the light from the headlight, based on the acquired work implement information to perform antiglare.

8. The method of antiglare control for a work machine according to claim 7, further comprising ending adjustment of the reflected light in a case of determining that a recognition portion that recognizes an image outside the machine body has shifted from a glare state to a non-glare state based on the work implement information and determining to end the adjustment of the reflected light.
